(19) Europäisches Patentamt
European Patent Office
Office européen des brevets

(11) Publication number: **0 498 142 A1**

# (12) EUROPEAN PATENT APPLICATION

(21) Application number: **91830032.8**

(51) Int. Cl.$^5$: **C08F 2/00**

(22) Date of filing: **05.02.91**

(43) Date of publication of application:
**12.08.92 Bulletin 92/33**

(84) Designated Contracting States:
**AT BE DE ES FR GB IT NL SE**

(71) Applicant: **C.I.R.S. COMPAGNIA ITALIANA RICERCA E SVILUPPO S.R.L.**
**Via Altinate, 111**
**I-35122 Padova(IT)**

(72) Inventor: **Carlin, Francesco**
**Via Altinate 111**
**I-35122 Padova(IT)**

(74) Representative: **D'Agostini, Giovanni, Dr.**
**D'AGOSTINI ORGANIZZAZIONE n. 17 via G.Giusti**
**I-33100 Udine(IT)**

(54) **An anti-crust decolorized material for the polymerization of the chlorinated olefinic monomers.**

(57) A decolorized anticrust material to be deposited on the internal surfaces of a polymerization reactor for the production of PVC-S of the type utilizing an amino-derived of the benzoic acid esterified on a polyvinylic alcohol in mix with a natural poliphenols extract particularly treated with sodium hydrosulfite.

EP 0 498 142 A1

The object of this invention is an anti-crust decolorized material for the polymerization of the chlorinated olefinic monomers.

This invention, more particularly, relates to a technology concerning an anti-crust decolorized material for the polymerization in the industrial production of the Polyvinylchloride in aqueous suspension (PVC-S).

It is known that in the reactors for the production of PVC-S during the polymerization process a substantial fouling crust deposit in the internal reactor surfaces is produced, with the following drawbacks:

- a consistent maintenance for the elimination of the foulings with consequent interruption of the production, opening of the reactor and so pollution, in high atmosphere with gaseous monomer vinyl chloride (VCM);
- pollution of the resulting product because some fouling parts pollute the respective polymerized product with consequent qualitative worsening and complaints of the users;
- in definitive hindrances both in the productive system and in ecologic problems for the areas in which the industrial plants of PVC-S. operate

In last years some specific property of the aromatic polyamines have found application as antifouling in the polymerization reactors of the olefines.

The results have been however not satisfactory, both for the poor anticrust efficacy and for the color of these products that being normally blue-black colored, produces, into the internal of the reactor, crusts that flaking pollute the resulting product.

Scope of the present invention is to obviate to said drawbacks.

According to the present invention, we provide to apply on the internal surfaces of the reactor, included the respective blades and its shaft, the thermometer sounds, the condenser, the breakwave poles etc., a film or an infinitesimal thickness white color anti-crust coating composed with the following aromatic polyamines mix opportunely treated and decolorized with sodium hydrosulfite:

- ammino benzoic ester of the polyvinylalcohol;
- natural poliphenols apples juice or wine juice extracts.

The best results, mainly under the profile of contamination from colored particles, have been obtained when the protective film of the product of the present invention is carried out with perfectly closed reactor and in total oxygen trails absence by means of spray with gaseous nitrogen.

Obviously the application system is not imitative as we can utilize a suspension in vapor, in monomer gaseous chloride vinyl or other.

According to invention the best result is achieved by washing the product with an aqueous solution containing one percent in sodium bicarbonate or citric acid weight. In this way the product that is insoluble with values of pH lower than 8, precipitates on the wall and the part in excess is washed away.

So we obtain an extremely thin white colored practically transparent superficial coating that will consent the utilization for more productive phases without noticeable colored particles trails that could contaminate the finished PVC-S.

The aromatic white color polyamines, deposited on the internal parts of the reactor in minimum quantity, do not influence the polymerization reaction ; totally protect instead the internal parts of the reactor both in contact with the phase in aqueous suspension in reaction and in contact with the gas phase and avoid fastidious and wasteful polymer crust phenomenons and internal color in reactor.

The mechanism with which the aromatic polyamines prevent the polymer crust on the internal parts of the reactor during the polymerization of an olefinic monomer in catalyst oilsoluble presence, namely soluble in the same monomer, is not yet well known, we can however preconize that a free radical in expansion phase, rather than deposit on the metallic wall, is destroyed by the ammino group; well known in fact is the antioxidant effect of the ammino substances and mainly their sensible color contact variation with the oxygen of the air.

The application system according to invention is the following:

- application of the product in aqueous solution having pH comprised between 12 and 13 with 0,2 percent of active substance on the respective surfaces to be protected;
- washing the surfaces with water or with aqueous sodium bicarbonate solution;
- polymerization charge of the Polyvinylchloride in aqueous suspension (PVC-S), can follow.

The structures of the ammino substances and of the proposed poliphenols according to present invention are the following: (a) benzoic ammino ester of the polyvinylalcohol more or less acetilated.

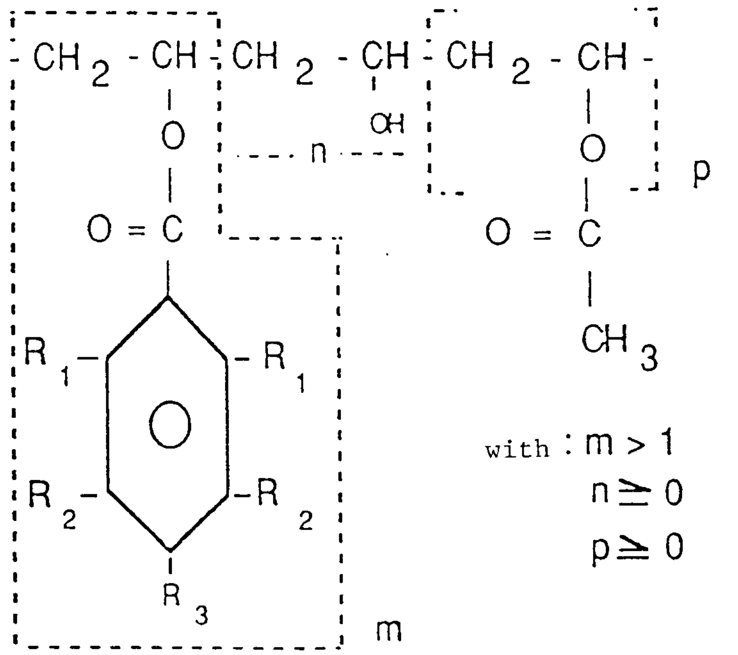

Where R1, R2, R3 can be H or $NH_2$ with at least one of the substituted groups $NH_2$.

The ratios of "m", "n" and "p" among them depend from the polyvinylic starting alcohol and from the grade of re-estherification which the polyvinylic alcohol is subdued. It is obvious that in this situation the sum and the ratios of "m", "n", "p", among them, determine also the solubility in water of the finished product, while the good protective capacity on the wall is determined by the number of the present ammino groups.

The reaction schema for the obtainment of the product is already described in CIRS IT-83459A/86 .

(b) extracts poliphenols mix from the apple juice and of wine.

The structures are typical of the di-hydroxilated flavonols :

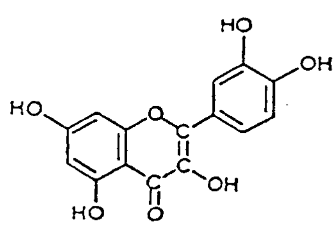

This particular natural extracted poliphenols mix by means of use of kitosan from apple juices and wine and so not toxic, is obtained applying the described technique in the Cesarin Patent IT 3426A/86 example No. 3 and 4 with the following variant:

- after having absorbed the present poliphenols in the fruit juices, we wash the kitosan with an aqueous solution of caustic soda. In this way all the natural poliphenols adsorbed by kitosan salt are transferred in basic aqueous solution (pH approximately 12.5) and so separated. This is described in the French patent 2435917 in the name of Societé des Produits Nestlé S.A.

But the basic solutions of the two described products in (a) and (b) are strongly blue-black colored and if used in the same way in the polymerization trial of the PVC-S they generate harmful dark color phenomenons of the internal parts of the reactor and contaminations under black points in the PVC-S obtained product.

After prolonged reaction series we can observe that the products (a) and (b), used together or separately, let in the internal walls of the reactor a dark red film tending to black that detaching pollutes the finished PVC-S.

This undesired color persists if all preparation processes of the products (a) and (b) are made in complete nitrogen atmosphere.

For the decoloration of the products (a) and (b), together or separately, we proceed in the following way: The basic solutions of the same products are heated to a temperature of 80 °C and we add in mixing, the sodium hydrosulfite. In few minutes the powerful reducing action of the sodium hydrosulfite transforms the anticrust products (a) and (b) from a blue-black color into a white color.

This final color is the one wished for the use of this invention in the polymerization processes in aqueous suspension of the Polyvinylchloride (PVC-S).

In the final composition of the anticrust material, object of the present invention, we have thus two decolorized products opportunely mixed between them and with the specific following functions:

- product (a) with capacity to deposit in the internal parts of the reactor in uniform way in infinitesimal quantity of colorless transparent film and containing a high ammino groups quantity.
- product (b) with passivation capacity of the internal parts of the reactor and of grouping during the coagulation in the product (a) and so forming with it a thin, transparent and mainly colorless, resistant anticrust material stratum.

Examples

Example 1

In one reactor with agitator, thermometer, condenser and with adequate system of thermoregulation, a solution of p-nitrobenzoil - chloride in dimetilformamide maintained at a temperature of 20 °C is placed.

Under agitation a solution of 10% of polyvinylic alcohol having average molecular weight of 100.000 and hydrolysis grade of 98% mole OH is slowly added, in dimetilformamide.

The agitation prosecutes for approximately 6 hours with contemporary removal of the gaseous chloridric acid that progresses in the reaction mix.

With completed esterification reaction (disappearing of the HCl gaseous evaporation), the resulted solution is dispersed in water in a proportion volume 1 to 20 maintaining under strong agitation.

In this condition precipitates a yellow color polymer that at the elementary analysis, "UV" and "IR" (ultraviolet rays and infrared analysis), has evidenced that it is of the p-$NO_2$ - benzoic (paranitrobenzoic) of the polyvinylic alcohol partially acetilated ester in starting.

The so obtained polymer, after desiccation, is dissolved in acetone (ratio 1:10).

To the so obtained solution, we add 2,9 moli OH of triethylamine and 2,2 moli of formic acid and then 0,1% of palladium on granular coal if compared to the monomeric residue of the polyvinylic alcohol. $CO_2$ and $H_2$ develop for approximately 3-6 hours. The reaction complete in 18 hours at the ebullition temperature of the acetone.

At the end of reaction we send away the product and recover the palladium on the coal.

We distill the acetone changing it with an aqueous solution containing 0,5% of hydrate of sodium.

At the end we obtain a basic aqueous solution of the ready product to be used as anticrust material as previously described.

The product in basic solution is photosensitive and easily oxidable with formation of different blue-black colored oxidation sub-products.

Example 2

A Hundred Kilograms of apples are reduced in slices and at 100 atmospheres we pressed in net of nylon with meshes of 0,25 mm.

We obtain 65 apple juice kilograms that are transferred in one inox steel reactor with agitator impeller and heating jacket.

We add 10 pectolitic enzymes grammes and agitation continues for 2 hours at 45 °C.

The juice is filtrated to separate the precipitated pectines.

The apple juice so clarified is recycled at the temperature of 25 °C for four hours in one absorption column containing 1 dust kilogram of kitosan of the type PRESSAID 101 producted from the KURITA Water Industries Ltd., finely milled with lower granulometry to 100 micron and 1 kilogram of celite 535 (granulometry not more to 250 micron).

While the apple juice is destined to the successive workings for use supply, the absorption column is washed in rycicle with an aqueous solution containing 0,8% of caustic soda at the temperature of 25 °C.

After one hour the washing is suspended and we obtain a basic aqueous solution containing the natural poliphenols of the type of the flavonols and this can be used as anticrust material as previously described.

The product in basic aqueous solution is photosensitive and easily oxidable with formation of various

blue-black colored oxidation sub-products

Example 3

We use 50 p.p. of aqueous solution obtained as described in example 1 and 50 p.p. of aqueous solution obtained according to example 2.

Under forceful agitation with abundant flow gaseous nitrogen and at the temperature of 80 ° C, we add 0,8 weight sodium parts hydrosulfite. With this treatment the mix of the two solutions passes from a color blue-black to a color lightly yellow.

For example we use 15 ml of solution per mq. of surface of the reactor.

The product so decolorized, if placed in contact with air, tends to change into green color and with the increasing of the exposition time it changes into blue-black color.

It is sufficient to place the product in nitrogen environment and after 3-4 hours the product decolorizes again.

The product is in form of a lightly yellow basic aqueous solution, when is diluted with aqueous solutions containing the 2% of sodium bicarbonate or citric acid weight , or tartaric acid, or acetic acid or chloridric acid weight etc., precipitates with values of pH lower than 8 in form of a gelatinous polymers mix, white and with forceful adhesion surface characteristics

Example No.4

In a stainless steel reactor, of the capacity of lt. 1500, polymerization reaction of PVC-S is made without application of an anticrust material with the following formula:

- $H_2O$/CVM = 1,3
- Primary suspension PVA 40/78 = 0,05% CVM + hydrossipropilmetilcellulose 0,03% CVM.
- Lauroilperoxide = 0,02% CVM Dimeristilperoxide 0,07% CVM
- Reaction temperature = 55 ° C.
- Pressure diminution from starting to the end of polymerization = 3,5.

After discharge of the reactor and water rinse, we observe a deposited film that after cooling is visible and undetachable.

The weight of this film was100 grammes.

Example No. 5

In the same reactor, after careful cleanness, the obtained mix as indicated in the example 3 is applied according to the following procedure:

- we spray on all the internal walls of the reactor approximately 25 ml. of antifouling mix ;
- the excess of the remained product on the same reactor is removed with water that besides to the washing of the surfaces, lowering rapidly the pH (from 12,5 to approximately 8) provides at the fundamental precipitation and fixation of the anticrust material according to this invention.

It is repeated the same loads of polymerization described in the Example n ° 4.

After the discharge of the aqueous suspension of PVC and washing of the reactor, the walls and all the internal parts of the same are perfectly exempt from any deposit and at the analysis of the PVC-S obtained , the anticrust material is not present.

Example No.6

In the same reactor after careful cleanness the obtained mix as indicated in the example 3 is applied according to the following procedure:

- we spray all the internal parts of the reactor with an aqueous solution containing 2,5% in sodium bicarbonate weight;
- we spray with low pressure vapor (at approximately 4 atmospheres) approximately 25 ml. of antifouling mix;
- the excess of spray is removed from the reactor by washing with water.

We repeat the same loads of polymerization as described in example 4.

After the discharge of the aqueous suspension of PVC and washing of the reactor, the walls and all the internal parts of the same are perfectly exempt of crust and in the analysis of the PVC-S obtained, anticrust material is not found.

Example No.7

In the same reactor after careful cleanness the obtained mix as indicated in the example 3 is applied according to following procedure:

- we spray all the internal parts of the reactor with an aqueous solution containing 2,5% in sodium bicarbonate weight ;
- we spray with gaseous nitrogen at the pressure of approximately 4 atmospheres approximately 25 ml. of anticrust material;
- the excess of the spray is removed from the reactor by means of water washing.

We repeat the same loads of polymerization according to example 4.

After discharge of the aqueous suspension of PVC and washing of the reactor, the walls and all the internal parts of the same was perfectly clean and the analysis of the PVC-S obtained does not show anticrust material.

Example No 8

In the same reactor after careful cleaning the obtained mix as indicated in the example 3 is applied according to the following procedure:

- we spray all the internal parts of the reactor with an aqueous solution containing 2,5% in sodium bicarbonate weight;
- we spray with gaseous monomer vinyl chloride at the pressure of approximately 5 atmospheres, approximately 25 ml. of antifouling material;
- the excess of spray material is removed from the reactor by means of water washing.

We repeat the same loads of described polymerization with the example 4.

After the discharge of the aqueous suspension of PVC and washing of the reactor, the walls and all the internal parts of the same are perfectly exempt of crust and in the analysis of the PVC-S so obtained anticrust material is not present .

**Claims**

**1.** An anticrust material to be applied on the internal surfaces of a polymerization reactor for the production of PVC-S (Polyvinylchloride in suspension), characterized in that this material is an aqueous solution having the following composition:

(a) from 0,1 to 2 percent in weight of an amino-derived of the benzoic acid esterificated on polyvinylic alcohol that includes elements corresponding to the following structures:

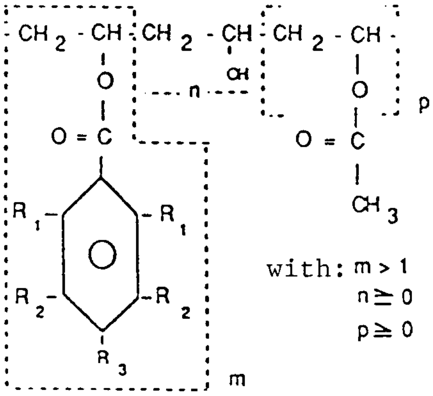

with: $m > 1$
$n \geq 0$
$p \geq 0$

(b) from 0,1 to 2 percent in weight of natural poliphenols extracted from apple juice and wine juice by means of use of kitosan classifiable in the group of the flavonols and with typical structure of the quercitine

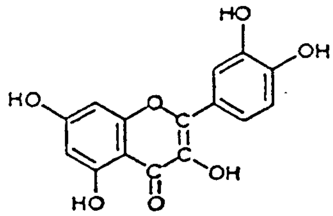

(c) from 0,01 to 1,5 percent in weight of sodium hydrosulphite;
(d) from 0,1 to 0,9 percent in weight of hydrate sodium ;
(e) from 94 to 99,8 percent in weight of water.

**2.** A method for the application of an anticrust material, according to claim 1, characterized by the following steps:
(a) An aqueous solution from 0,2 to 5 percent in active antifouling weight, on the surfaces to be protected is applied;
(b) The treated surfaces are washed.
(c) The polymerization charge of the PVC-S is operated.

**3.** A method for the application of an antifouling material according to claim 1, characterized by the following steps:
(a) The surfaces to be protected are prethreated with an aqueous solution containing from 0,5 to 4 percent in sodium bicarbonate weight.
(b) An aqueous solution having from 0,2 to 5 percent in active antifouling substance weight, is applied on the surfaces to be protected utilizing steam with pressure between 1 and 20 $Kg/cm^2$.
(c) The treated surfaces are washed.
(d) The polymerization charge of the PVC-S is operated.

**4.** A method for the application of an antifouling material according to claim 1, characterized by the following steps:
(a) The surfaces to be protected are prethreated with an aqueous solution containing from 0,5 to 4 percent in sodium bicarbonate weight.
(b) An aqueous solution, from 0,2 to 5 percent in active antifouling weight is applied on the surfaces to be protected, utilizing gaseous nitrogen at a pressure between 1 and 6 Kg./cm.
(c) The treated surfaces are washed.
(d) The polymerization charge of the PVC-S is operated.

**5.** A method for the application of an antifouling material according to claim 1, characterized by the following steps:
(a) The surfaces to be protected are prethreated with an aqueous solution containing from 0,5 to 4 percent in sodium bicarbonate weight.
(b) An aqueous solution, with 0,2 to 5 percent in active antifouling weight, is applied on the surfaces to be protected utilizing gaseous vinyl chloride monomer at a pressure between 1 and 6 $Kg/cm^2$.
(c) The treated surfaces are washed.
(d) The polymerization charge of the PVC-S is operated.

European Patent Office

# EUROPEAN SEARCH REPORT

Application Number

EP 91 83 0032

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | WO-A-8 805 055 (C.I.R.S. COMPAGNIA ITALIANA RICERCA)<br>* Claims 1-3 * | 1 | C 08 F 2/00 |
| A | GB-A-2 117 272 (CHLOE CHIMIE)<br>* Claim 1; page 1, lines 48-61 * | 1 | |
| A | PATENT ABSTRACTS OF JAPAN, vol. 11, no. 80 (C-409)[2527], 11th March 1987; & JP-A-61 235 401 (TOYO SODA) 20-10-1986<br>* Abstract * | 1 | |
| A | PATENT ABSTRACTS OF JAPAN, vol. 11, no. 80 (C-409)[2527], 11th March 1987; & JP-A-61 235 402 (TOYO SODA) 20-10-1986<br>* Abstracts * | 1 | |

TECHNICAL FIELDS SEARCHED (Int. Cl.5)

C 08 F

The present search report has been drawn up for all claims

| Place of search | Date of completion of the search | Examiner |
|---|---|---|
| THE HAGUE | 09-10-1991 | DEPIJPER R.D.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document